(19) Europäisches Patentamt
European Patent Office
Office européen des brevets

(11) **EP 2 438 400 B1**

(12) **FASCICULE DE BREVET EUROPEEN**

(45) Date de publication et mention
de la délivrance du brevet:
**01.01.2014  Bulletin 2014/01**

(21) Numéro de dépôt: **10734206.5**

(22) Date de dépôt: **01.06.2010**

(51) Int Cl.:
***G01C 19/56*** *(2012.01)*

(86) Numéro de dépôt international:
**PCT/FR2010/051066**

(87) Numéro de publication internationale:
**WO 2010/139893 (09.12.2010 Gazette 2010/49)**

(54) **CIRCUIT ÉLECTRONIQUE, GYRO-VIBRANT ET PROCÉDÉ DE TRAITEMENT ASSOCIÉ**

ELEKTRONISCHE SCHALTUNG, VIBRATIONSKREISEL UND ZUGEHÖRIGES VERARBEITUNGSVERFAHREN

ELECTRONIC CIRCUIT, VIBRATING GYROSCOPE, AND RELATED PROCESSING METHOD

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **02.06.2009  FR 0953634**

(43) Date de publication de la demande:
**11.04.2012  Bulletin 2012/15**

(73) Titulaire: **SAGEM Défense Sécurité
75015 Paris (FR)**

(72) Inventeur: **RENAULT, Alain**
**F-75015 Paris (FR)**

(74) Mandataire: **Cabinet Plasseraud
52, rue de la Victoire
75440 Paris Cedex 09 (FR)**

(56) Documents cités:
**EP-A1- 0 810 418**

**Description**

La présente invention concerne un circuit électronique, un gyro-vibrant comprenant ce circuit électronique et un procédé de traitement associé.

Les gyro-vibrants sont généralement constitués par un support, un résonateur monté sur le support, des électrodes d'excitation propres à exciter le résonateur, des électrodes de détection aptes à détecter des signaux représentatifs de la vibration du résonateur et un circuit électronique conformé pour générer des signaux d'excitation et traiter les signaux de détection.

En fonctionnement, le résonateur est excité à un de ses modes de vibration propres par l'intermédiaire des électrodes d'excitation.

Lorsque le support du résonateur est pivoté d'un angle de rotation $\theta_c$ par rapport à un repère fixe, le mode de vibration du résonateur est modifié. Le circuit électronique est apte à déterminer l'angle de rotation $\theta_c$ du support à partir des signaux de détection mesurés par les électrodes de détection.

En pratique, le résonateur présente souvent des balourds ou des imperfections de fabrication qui génèrent des modes de vibration supplémentaires qui faussent la détermination de l'angle de rotation $\theta_c$. Ces modes de vibration supplémentaires sont appelés ci-après modes de vibration parasites.

La présente invention a pour but de proposer un circuit électronique propre à éliminer au moins une partie de ces modes de vibration parasites.

A cet effet, l'invention a pour objet un circuit électronique pour gyro-vibrant comportant un résonateur, le circuit électronique comprenant :

- au moins une entrée propre à recevoir le signal de détection représentatif de la vibration du résonateur, le signal de détection comprenant au moins un mode de vibration propre et au moins un mode de vibration parasite ;
- au moins une unité de démodulation apte à démoduler le signal de détection pour générer un signal de détection démodulé en phase et un signal de détection démodulé en quadrature ;

caractérisé en ce qu'il comporte en outre une unité de traitement et un soustracteur propres à éliminer au moins une partie du signal de détection représentatif du mode de vibration parasite à partir du signal de détection démodulé en phase et du signal de détection démodulé en quadrature.

Suivant des modes particuliers de réalisation, le circuit électronique comporte l'une ou plusieurs des caractéristiques suivantes :

- l'unité de traitement est propre à traiter un signal parmi un premier signal et un second signal ; le premier signal et le second signal étant choisis parmi le signal de détection démodulé en phase et le signal de détection démodulé en quadrature ; ledit soustracteur étant propre à soustraire le signal traité au signal non traité.
- l'unité de traitement comprend un filtre passe-bande propre à filtrer au moins un signal parmi le signal de détection démodulé en phase et le signal de détection démodulé en quadrature ;
- le filtre passe-bande est centré sur une fréquence égale à la fréquence repliée du mode de vibration parasite ;
- le filtre passe-bande présente une largeur de bande environ égale aux dispersions de fréquence résultantes des variations de température et aux dispersions de fréquence résultantes des tolérances de fabrication ;
- l'unité de traitement comprend un déphaseur propre à déphaser, d'un angle multiple de $\pi/2$, un signal parmi le signal de détection démodulé en phase et le signal de détection démodulé en quadrature ;
- le déphaseur est connecté au filtre passe-bande ;
- le filtre passe-bande est relié au soustracteur.
- le circuit électronique comprend :

  - au moins une branche de détection comprenant des composants électroniques aptes à détecter une information angulaire à partir du signal de détection démodulé en phase ;
  - au moins une branche de détermination comprenant des composants électroniques aptes à déterminer une composante de commande du signal d'excitation du résonateur à partir du signal de détection démodulé en quadrature ;
  - ledit soustracteur appartenant à une branche parmi la branche de détection et la branche de détermination, ledit soustracteur étant propre à soustraire le signal de sortie de l'unité de traitement au signal d'entrée du soustracteur ;

- le soustracteur appartient à la branche de détection ;
- ledit soustracteur est relié à au moins un composant électronique de la branche de détection et à la sortie de l'unité de traitement pour soustraire le signal de sortie de l'unité de traitement au signal de sortie d'au moins un composant électronique de la branche de détection ;

- ledit soustracteur est relié à au moins un composant électronique de la branche de détermination et à la sortie de l'unité de traitement pour soustraire le signal de sortie de l'unité de traitement au signal de sortie d'au moins un composant électronique de la branche de détermination ;
- le circuit électronique comprend :

  - au moins une branche de génération comprenant des composants électroniques aptes à générer un signal de référence en phase et un signal de référence en quadrature à partir du signal de détection démodulé en quadrature ;
  - au moins une branche de détermination comprenant des composants électroniques aptes à déterminer un signal de commande d'amplitude du signal d'excitation du résonateur à partir du signal de détection démodulé en phase ; et
  - un soustracteur supplémentaire disposé sur une branche parmi la branche de génération et la branche de détermination, ledit soustracteur supplémentaire étant propre à soustraire le signal de sortie de l'unité de traitement au signal d'entrée du soustracteur.

- l'unité de traitement est propre à éliminer au moins une partie du signal de détection représentatif du mode de vibration parasite d'un premier signal à un second signal, le premier et le second signal étant choisis parmi le signal de détection démodulé en phase et le signal de détection démodulé en quadrature ;
- l'unité de traitement comprend un déphaseur propre à déphaser le signal filtré d'un angle multiple de $\pi/2$.

L'invention a également pour objet un gyro-vibrant comportant :

- un résonateur propre à vibrer ;
- des éléments d'excitation propres à appliquer un signal d'excitation au résonateur pour le faire vibrer ;
- des éléments de détection aptes à détecter la vibration du résonateur et à générer au moins un signal de détection représentatif de ladite vibration ;

caractérisé en ce qu'il comporte un circuit électronique de l'invention selon l'un quelconque des modes de réalisations décrits précédemment.

Enfin, l'invention a également pour objet un procédé de traitement des signaux de détection d'un gyro-vibrant comportant un résonateur, le procédé comportant les étapes suivantes :

- application d'un signal d'excitation au résonateur pour le faire vibrer ;
- détection d'un signal de détection représentatif de la vibration du résonateur, le signal de détection comprenant au moins un mode de vibration propre et au moins un mode de vibration parasite ;
- multiplication du signal de détection à une porteuse en phase et à une porteuse en quadrature pour obtenir un signal de détection démodulé en phase et respectivement un signal de détection démodulé en quadrature ; et

caractérisé en ce qu'il comporte en outre une étape d'élimination, par traitement et soustraction, d'au moins une partie du signal de détection représentatif du mode de vibration parasite à partir du signal de détection démodulé en phase et du signal de détection démodulé en quadrature.

L'invention sera mieux comprise à la lecture de la description qui va suivre, donnée uniquement à titre d'exemple et faite en se référant aux dessins, sur lesquels :

- la figure 1 est un schéma représentatif des moyens d'excitation d'un résonateur et d'une vibration de résonateur selon un mode d'ordre 2 ;
- la figure 2 est une représentation de la vibration d'un point du résonateur illustré sur la figure 1, dans le référentiel des modes propres ;
- la figure 3 est un schéma fonctionnel d'un circuit électronique selon l'état de la technique ;
- la figure 4 est un schéma fonctionnel d'une unité de traitement du circuit électronique selon un premier mode de réalisation de l'invention ;
- la figure 5 est un schéma fonctionnel d'une unité de traitement d'un circuit électronique selon un second mode de réalisation de l'invention ;
- la figure 6 est un schéma fonctionnel d'une partie d'une unité de traitement d'un circuit électronique selon un troisième mode de réalisation de l'invention ; et
- la figure 7 est un diagramme des étapes du procédé selon l'invention.

La présente invention concerne tout type de gyro-vibrant. En particulier, il existe différents types de gyro-vibrants dénommés différemment en fonction de la forme du résonateur. Par exemple, lorsque le résonateur a la forme d'une cloche hémisphérique, le gyro-vibrant est appelé gyroscope ou gyromètre résonant hémisphérique.

Lorsque le résonateur est constitué par deux peignes ou un anneau vibrant fabriqués selon une technologie de micro-électronique (épitaxie, résinage, photolithographie), le gyro-vibrant est appelé un gyroscope MEMS.

Lorsque le résonateur est composé de quatre poutres parallèles identiques disposées suivant les angles d'un parallélépipède rectangle solidaire d'un socle commun de fixation. Le gyro-vibrant est appelé un Quapason™.

La présente invention concerne l'ensemble de ces gyros-vibrant. Seul un exemple de gyro-vibrant 2 à cloche hémisphérique sera décrit ci-dessous. Ce gyro-vibrant est décrit dans le brevet EP 0 810 418.

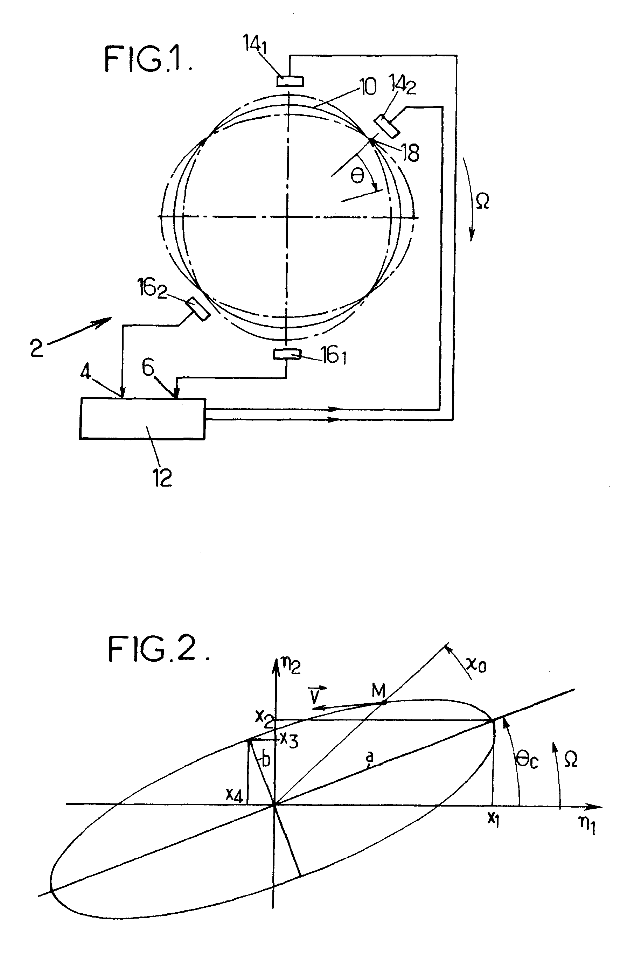

En référence à la figure 1, le gyro-vibrant 2 comprend un résonateur 10 en forme de cloche hémisphérique représenté schématiquement par son équateur sous la forme d'un cercle en trait plein, deux transducteurs $14_1$, $14_2$, placés à 45° l'un de l'autre, deux capteurs $16_1$, $16_2$ positionnés en vis-à-vis des transducteurs $14_1$, $14_2$ et un circuit électronique 12 connecté aux transducteurs $14_1$, $14_2$ et aux capteurs $16_1$, $16_2$.

Les transducteurs $14_1$ et $14_2$ sont des éléments d'excitation propres à appliquer un signal d'excitation au résonateur 10 pour le faire vibrer dans un de ses modes de vibration propres.

Les capteurs $16_1$, $16_2$ sont des éléments de détection aptes à détecter la vibration du résonateur 10 et à générer des signaux de détection représentatifs de cette vibration qui sont transmis au circuit électronique 12.

Au repos, le résonateur 10 est circulaire comme représenté en trait plein sur la figure 1. Lorsque le résonateur 10 est excité par les transducteurs $14_1$ et $14_2$, il vibre, par exemple selon un mode d'ordre 2 dans lequel il prend les deux formes extrêmes représentées en traits mixtes et à échelle agrandie sur la figure 1.

Le circuit électronique 12 selon l'invention peut être monté dans un gyro-vibrant fonctionnant selon un mode gyroscopique ou selon un mode gyrométrique.

Dans le mode gyroscopique, la vibration du résonateur 10 est entretenue, mais la position des noeuds de vibration est laissée libre. Lorsque le support est tourné, la position des noeuds de vibration par rapport au support est représentative de l'angle dont le support a tourné.

Dans le mode gyrométrique, la vibration du résonateur 10 est entretenue et la position des noeuds de vibration par rapport au support est maintenue fixe par l'envoi d'une commande électronique appropriée. La valeur de cette commande est alors représentative de la vitesse de rotation du support dans l'espace inertiel.

Les signaux de détection provenant des capteurs $16_1$ et $16_2$ sont modulés à la fréquence w de vibration. Le signal de détection du capteur $16_1$ peut être considéré comme ayant une composante en phase, notée $x_1$, et une composante en quadrature, notée $x_3$, l'une et l'autre modulées à la fréquence w. De façon similaire, le signal de détection du capteur $16_2$ a une composante en phase notée $x_2$ et une composante en quadrature notée $x_4$, l'une et l'autre modulées à la fréquence w.

Dans la réalité, chaque transducteur $14_1$, $14_2$ est alimenté en parallèle avec un transducteur placé en face et deux transducteurs placés à 90°, non représentés pour plus de simplicité.

Quelle que soit la nature du résonateur, dans la mesure où il présente un mode de vibration stationnaire, d'ordre 1 au moins, le déplacement d'un point M dans un référentiel des modes de vibration propres $\eta_1$, $\eta_2$ peut être représenté par le diagramme de la figure 2.

Sur ce diagramme :

- $\eta_1$ et $\eta_2$ sont les axes du référentiel des modes de vibration propres,
- $\Omega$ est la vitesse de rotation du support,
- M est le point courant représentatif de l'état de vibration,
- $\theta$ est l'angle d'inclinaison estimé du support,
- $\theta_d$ est une valeur de consigne de l'angle d'inclinaison,
- $\theta_c$ est l'angle d'inclinaison réel du support,
- $x_1$, $x_2$, $x_3$, $x_4$ sont les composantes du mode de vibration du résonateur dans le référentiel $\eta_1$, $\eta_2$,
- 2a et 2b sont les grand et petit axes de l'ellipse représentative de la vibration, a est la composante d'amplitude et b la composante appelée quadrature spatiale,
- b est la composante de vibration d'amplitude, elle est souvent dénommée quadrature spatiale,
- $\chi_0$ est la phase d'un oscillateur de référence 20.

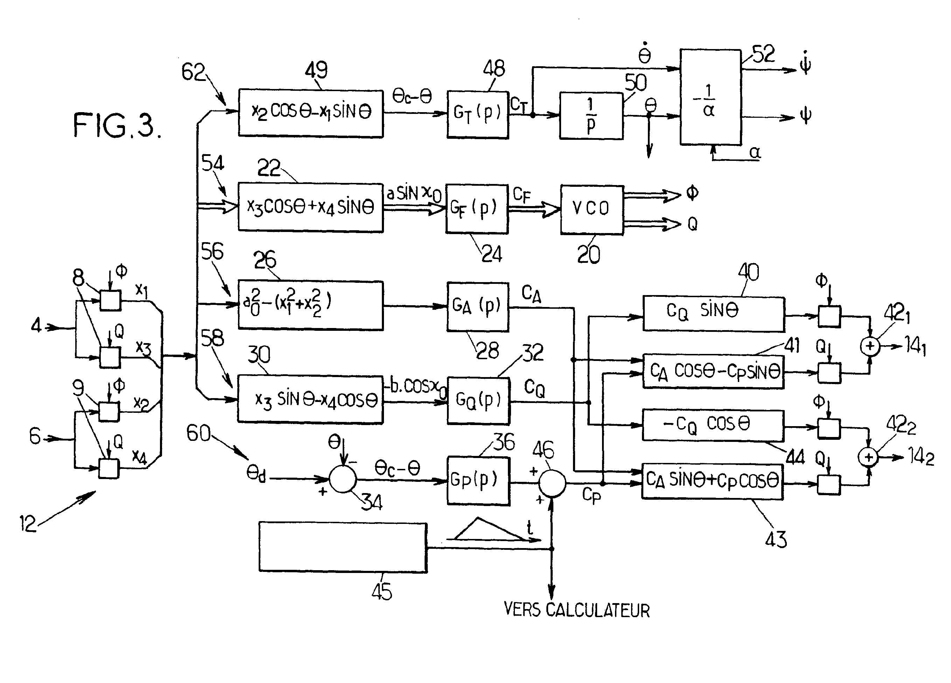

En référence à la figure 3, le circuit électronique 12 comprend une entrée 4 propre à recevoir le signal de détection mesuré par le capteur $16_1$, une entrée 6 apte à recevoir le signal de détection mesuré par le capteur $16_2$. Chacun de ces signaux est multiplié dans les unités de démodulation 8, 9 par une porteuse en phase $\Phi$ et une porteuse en quadrature Q à la fréquence w pour générer des signaux de détection démodulés en phase $x_1$, $x_2$ et des signaux de détection démodulés en quadrature $x_3$, $x_4$.

Le circuit électronique 12 comprend en outre une branche 54 destinée à fournir un signal de référence, ci-après appelé porteuse, à fréquence $\omega$. Cette branche 54 contient un oscillateur de référence 20 commandé par un signal de commande $C_F$ qui présente une phase $\chi_0$, à laquelle on cherche à donner une valeur nulle, de façon que l'oscillateur constitue un invariant temporel indépendant de l'angle d'inclinaison réel $\theta_c$ du support.

Le signal $C_F$ de commande de l'oscillateur 20 est élaboré dans la branche 54 par un élément 22 de calcul de $x_3\cos\theta + x_4\sin\theta$, qui fournit une sortie représentative de $a\sin\chi_0$. Le signal résultant de l'élément 22 est filtré et amplifié par le bloc 24 avec un gain $G_F(p)$. Le signal de sortie $C_F$ du bloc 24 est appliqué à l'oscillateur de référence 20, à la sortie duquel on obtient un signal de référence en phase $\Phi$ aussi appelé porteuse en phase $\Phi$ et un signal de référence en quadrature Q aussi appelé porteuse en quadrature Q. Par la suite, on désignera par amplification toutes les opérations de la forme $G(p)$, pour simplifier.

La porteuse en phase $\Phi$ et la porteuse en quadrature Q ainsi obtenues sont utilisées pour effectuer une démodulation synchrone des signaux de détection sortant des capteurs $16_1$, $16_2$.

Une branche 56 d'entretien de la vibration stationnaire à une amplitude constante peut comporter, de façon classique, un élément de calcul 26 permettant d'obtenir $a_0^2-(x_1^2+x_2^2)$, où $a_0$ est l'amplitude à maintenir. Le signal d'erreur obtenu dans l'élément 26 est amplifié dans le bloc 28, avec un gain prédéterminé $G_A(p)$ de façon à obtenir un signal $C_A$ de commande d'amplitude.

Le circuit électronique 12 comporte des moyens d'annulation de la quadrature temporelle b. Pour cela, le circuit électronique 12 comporte une branche 58 de calcul d'un terme proportionnel à la quadrature spatiale b. Pour cela, cette branche 58 comprend un élément 30 de calcul de $x_3\sin\theta - x_4\cos\theta$. Le signal d'erreur $-b\cos\chi_0$ ainsi obtenu est amplifié dans le bloc 32 avec un gain $G_Q(p)$ de façon à fournir une composante de commande $C_Q$.

Les signaux amplifiés dans les blocs 28, 32 et 36 sont utilisés pour élaborer les signaux d'excitation appliqués aux transducteurs $14_1$, $14_2$. Chacun des signaux envoyés aux transducteurs résulte d'un traitement trigonométrique et d'une remodulation.

Les composantes destinées à annuler la quadrature spatiale b sont remodulées par la porteuse en phase $\Phi$ à la fréquence w. La composante de commande $C_Q$ sortant du bloc 32 est multipliée dans le bloc 40 par $\sin\theta$, modulée par la porteuse en phase $\Phi$ et appliquée à un additionneur $42_1$ qui alimente le transducteur $14_1$. La composante de commande $C_Q$ est multipliée par $-\cos\theta$ dans le bloc 44, remodulée et appliquée à un additionneur $42_2$ d'alimentation du transducteur $14_2$.

Le circuit électronique 12 de la figure 3 comprend également une branche 60 de précession permettant de faire fonctionner le gyro-vibrant 2 à volonté soit en gyroscope, soit en gyromètre. Cette branche 60 reçoit en entrée la valeur de l'angle d'inclinaison estimé actuel $\theta$ ainsi que la valeur de consigne $\theta_d$ de l'angle, à maintenir entre l'axe d'oscillation (c'est-à-dire l'axe de l'ellipse de la figure 2) et l'axe de détection $\eta_1$. Un soustracteur 34 fournit un signal de sortie égal à $\theta_d-\theta$, qui constitue un signal d'erreur soumis à une amplification de gain $G_p(p)$ dans le bloc 36.

Le circuit électronique 12 comprend en outre une commande manuelle de précession 45 permettant d'ajouter, au signal de commande des transducteurs $14_1$ et $14_2$, une composante variable et connue, destinée à provoquer une précession de la vibration. Cette composante est ajoutée à la sortie amplifiée 36, dans un additionneur 46. La commande de précession et la modification de l'angle d'inclinaison estimé $\theta$ qui en résulte sont prises en compte dans un calculateur pour réaliser un calibrage. Le signal sortant de l'additionneur 46 est le signal de précession $C_P$.

Le maintien de l'amplitude d'oscillation à une valeur constante et la précession forcée résultent d'une combinaison des signaux sortant des blocs 28 et 36.

Le signal appliqué à l'additionneur $42_1$, après remodulation par la porteuse en quadrature Q, est obtenu par calcul de $C_A\cos\theta - C_P\sin\theta$ dans l'élément 41.

Le signal appliqué à l'additionneur $42_2$ après modulation par la porteuse en quadrature Q est élaboré par calcul de $C_A\sin\theta + C_P\cos\theta$ dans l'élément 43.

Enfin, le circuit électronique 12 comprend une branche 62 de calcul de l'angle d'inclinaison estimé $\theta$. Cette branche 62 comporte un élément 49 de calcul de $x_2\cos\theta - x_1\sin\theta$, qui fournit en sortie une grandeur représentative de l'écart entre l'angle d'inclinaison réelle $\theta_c$ du grand axe de l'ellipse et l'angle d'inclinaison estimée $\theta$. Ce signal de sortie est amplifié avec un gain $G_T(p)$ dans l'amplificateur 48 et la sortie représente la dérivée de l'angle d'inclinaison $\dot{\theta_c}$, à partir de laquelle on peut obtenir, par intégration en 50, l'angle d'inclinaison réel $\theta_c$ lui-même.

Des valeurs de l'angle d'inclinaison réel $\theta_c$ et de la dérivée de cet angle $\dot{\theta_c}$, il est possible de passer aux vitesses de rotation à mesurer par multiplication par $-1/\alpha$ dans le bloc 52. $\alpha$ est le coefficient d'entraînement de Bryan. Le coefficient de Bryan est défini par les dimensions du résonateur.

L'ensemble des opérations qui viennent d'être décrites peut être effectué à l'aide d'un microcontrôleur de type couramment disponible dans le commerce et de quelques éléments supplémentaires.

Le circuit électronique 12 selon l'invention comporte en plus des éléments du circuit électronique 12 représentés sur la figure 3 une unité de traitement 64, et un soustracteur 70 relié à l'unité de traitement 64.

L'unité de traitement 64 et le soustracteur 70 sont propres à filtrer au moins une partie du signal de détection représentatif du mode de vibration parasite p à partir du signal de détection démodulé en phase $x_1$, $x_2$ et du signal de détection démodulé en quadrature $x_3$, $x_4$.

Cette unité de traitement 64 comprend un filtre passe-bande 66 et un déphaseur 68 connecté au filtre passe-bande 66.

Le filtre passe-bande 66 est centré sur une fréquence égale à la fréquence repliée du mode de vibration parasite p. Le filtre passe-bande 66 présente une largeur de bande environ égale aux dispersions de fréquence résultantes des variations de température et aux dispersions de fréquence résultantes des tolérances de fabrication du résonateur. Généralement, cette largeur de bande est environ égale à environ un dixième de la valeur de la fréquence repliée.

Le déphaseur 68 est propre à déphaser le signal sortant du filtre passe-bande 66 d'un angle de $\pi/2$ ou d'un angle multiple de $\pi/2$.

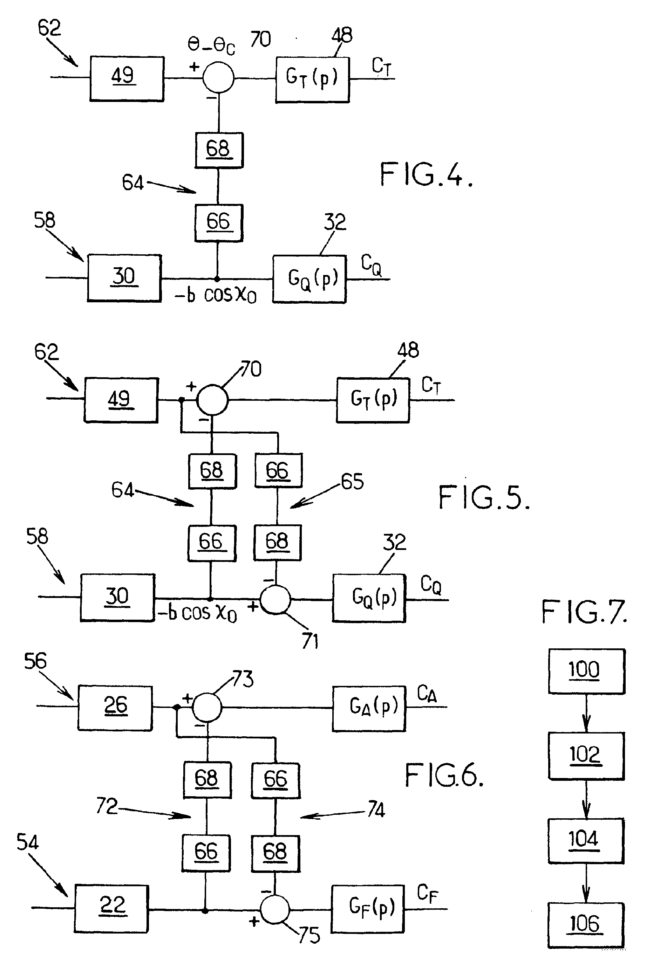

Dans le premier mode de réalisation de l'invention illustré sur la figure 4, le filtre passe-bande 66 est connecté à l'élément 30 et le soustracteur 70 est relié entre l'élément 49 et le bloc 48. Le soustracteur 70 est propre à soustraire le signal de détection démodulé en quadrature $\pi_3$, $x_4$ traité au signal non traité, c'est-à-dire au signal de détection démodulé en phase $x_1$, $x_2$. En particulier, le soustracteur 70 est propre à soustraire la fonction $x_3\sin\theta - x_4\cos\theta$ représentative de la composante de commande $C_Q$ traitée par l'unité de traitement 64, à la fonction $x_2\cos\theta - x_1\sin\theta$ représentative de l'information angulaire $\theta_c - \theta$.

En variante, l'unité de traitement 64 est connectée en aval des éléments 32 et 48 plutôt qu'en amont de ceux-ci.

En variante, le déphaseur 68 est remplacé par un intégrateur ou un dérivateur.

En variante également, l'unité de traitement 64 ne comprend pas de filtre passe-bande 66. Dans ce cas, l'unité de traitement 64 comporte uniquement un déphaseur 68. En effet, pour des résonateurs fabriqués dans certains matériaux et avec certaines fréquences de modes parasites et certaines fréquences des chaines d'asservissement, la branche de détermination de la composante de commande $C_Q$ asservie la quadrature spatiale avec une faible bande passante et réalise ainsi partiellement la fonction du filtre passe-bande.

Lorsque le gyro-vibrant 2 fonctionne en mode gyroscopique, le signal de détection sortant du capteur $16_1$ est égal à $a\sin\omega t$ avec $\omega$ la fréquence du résonateur 10 et $a$ l'amplitude de la vibration. Supposons que le gyro-vibrant 2 est pivoté d'un angle d'inclinaison réel $\theta_c$, le signal de détection sortant du capteur $16_1$ est alors égal à $a\sin\theta_c * \sin\omega t$.

Les signaux réceptionnés par les entrées 4, 6 comportent une partie de signal de détection relative au mode de vibration propre du résonateur 10, ci-après appelée première partie du signal de détection, et une partie du signal de détection relative au mode de vibration parasite du résonateur, ci-après appelée seconde partie du signal de détection.

La démodulation de la première partie du signal de détection par la porteuse en quadrature Q= cos $\omega t$ donne, à la sortie de l'élément 30, le signal suivant :

$$-b\cos\chi_0 = a\sin\theta c * \sin\omega t * \cos\omega t = \frac{a}{2}\sin\theta c * \sin 2\omega t$$

Ce signal est nul après filtrage à $2\omega$ par le filtre passe bande 66.

La démodulation de la seconde partie du signal de détection $\sin(p + \omega)t$ avec $p+\omega$ fréquence du mode de vibration parasite ($p + \omega$ proche de $\omega$), par la porteuse en quadrature Q= cos $\omega t$ donne, à la sortie de l'élément 30, le signal suivant :

$$-b\cos\chi_0 = \sin(p+\omega)t * \cos\omega t = \frac{1}{2}(\sin pt + \sin(p+2\omega)t)$$

Après filtrage du signal à p + 2 $\omega$ par le filtre passe-bande 66, ce signal est égal à $\frac{1}{2}\sin pt$. Après passage dans le déphaseur 68, ce signal est égal à $\frac{1}{2}\cos pt$.

La démodulation de la première partie du signal de détection par la porteuse en phase $\Phi = \sin\omega t$ donne, à la sortie de l'élément 49, le signal suivant:

$$\theta c - \theta = a\sin\theta c * \sin\omega t * \sin\omega t = \frac{a}{2}\sin\theta c * (1-\cos 2\omega t).$$

La démodulation de la seconde partie du signal de détection $\sin(p + \omega)t$ avec $p + \omega$ fréquence du mode de vibration parasite (proche de $\omega$) par la porteuse en phase $\Phi$, donne, à la sortie de l'élément 49, le signal suivant:

$$\theta c - \theta = \sin(p + \omega)t * \sin \omega t = \frac{1}{2}(\cos pt - \cos(p + 2\omega)t)$$

Comme le signal $\frac{1}{2}\cos pt$ est retranché à ce signal par le soustracteur 70, $\theta_c$-$\theta$ devient égal à 0.

La branche 58 réalise le signal de commande $C_Q$ à partir du signal $-b\cos \chi_0$ à l'aide du gain $G_Q(p)$ dans l'élément 32 avec une petite bande passante. En conséquence, le signal de détection représentatif du mode de vibration p ne gêne pas car il est hors bande passante et amplifié par un gain faible.

Les branches 54 et 56 ne sont pas affectées par la fréquence parasite p. Les signaux démodulés $x_1$ et $x_1$ sont pollués par des signaux de fréquence p, mais les bandes passantes de la boucle d'amplitude et de la boucle à verrouillage de phase sont inférieures à cette fréquence.

Selon un deuxième mode de réalisation de l'invention représenté sur la figure 5, le circuit électronique 12 comporte une première 64 et une deuxième 65 unités de traitement, un premier 70 et un second 71 soustracteurs connectés entre les branches 58 et 62. La première unité de traitement est identique à l'unité de traitement illustrée sur la figure 4 et ne sera pas décrite une seconde fois. Les éléments de la deuxième unité de traitement 65 identiques aux éléments de l'unité de traitement 64 illustrée sur la figure 4 portent les mêmes références et ne seront pas décrits une seconde fois.

La deuxième unité de traitement 65 comporte un filtre passe-bande 66 relié au bloc 49, un déphaseur 68 connecté au filtre passe-bande 66. Le deuxième soustracteur 71 est relié au déphaseur 68 et à l'élément 32. L'unité de traitement 65 est propre à filtrer le signal de fréquence parasite p du signal $-b\cos \chi_0$.

Selon ce mode de réalisation, la première unité de traitement 64 et le premier soustracteur 70 sont propres à soustraire le signal de détection démodulé en quadrature $x_3$, $x_4$ traité au signal non traité, c'est-à-dire au signal de détection démodulé en phase $x_1$, $x_2$ ; et la deuxième unité de traitement 65 et le deuxième soustracteur 71 sont propres à soustraire le signal de détection démodulé en phase $x_1$, $x_2$ traité au signal non traité, c'est-à-dire au signal de détection démodulé en quadrature $x_3$, $x_4$. En particulier, le deuxième soustracteur 71 est propre à soustraire la fonction $x_2\cos\theta$ - $x_1\sin\theta$ représentative de l'information angulaire $\theta_c$-$\theta$ traitée par l'unité de traitement 65, à la fonction $x_3\sin\theta$ - $x_4\cos\theta$ représentative de la composante de commande $C_Q$.

En variante, l'unité de traitement 64 et la deuxième unité de traitement 65 sont connectées en aval des éléments 32 et 48 plutôt qu'en amont de ceux-ci.

Selon un deuxième mode de réalisation de l'invention représenté sur la figure 5, le circuit électronique 12 comporte en plus du montage illustré sur la figure 4 ou du montage illustré sur la figure 5, une troisième 72 et une quatrième 74 unités de traitement ainsi qu'un troisième 73 et un quatrième 75 soustracteurs connectés entre les branches 54 et 56.

La troisième unité de traitement 72 est propre à filtrer le signal de fréquence parasite p sortant de l'élément 26. La quatrième unité de traitement 74 est propre à filtrer le signal de fréquence parasite p du signal $-a\sin \chi_0$.

En référence à la figure 7, le procédé de traitement selon l'invention débute par une étape 100 d'application d'un signal d'excitation au résonateur 10 de manière à le faire vibrer.

Puis, au cours d'une étape 102, les capteurs $16_1$, $16_2$ détectent des signaux de détection représentatifs de la vibration du résonateur 10.

Au cours d'une étape 104, les unités de démodulation 8, 9 démodulent les signaux de détection mesurés par les capteurs $16_1$, $16_2$ pour obtenir les signaux de détection démodulés en phase $x_1$, $x_2$ et les signaux de détection démodulés en quadrature $x_3$, $x_4$.

Puis, l'élément de calcul 49 calcule la fonction $x_2\cos\theta$ - $x_1\sin\theta$. L'élément 30 calcule la fonction $x_3\sin\theta$ - $x_4\cos\theta$.

Selon l'invention, le procédé de traitement comporte en outre une étape 106 d'élimination d'au moins une partie du signal de détection représentative du mode de vibration parasite p à partir du signal de détection démodulé en phase et du signal de détection démodulé en quadrature.

Cette étape d'élimination 106 comporte une étape de traitement du signal de détection démodulé en quadrature -c'est-à dire de la fonction $x_3\sin\theta$ - $x_4\cos\theta$-représentative de la composante de commande de $C_Q$ et une étape de soustraction du signal traité au signal non traité. Autrement dit, une étape de soustraction du signal de détection démodulé en quadrature traité au signal de détection démodulé en phase, c'est-à-dire à la fonction $x_2\cos\theta$ - $x_1\sin\theta$ représentative de l'information angulaire $\theta_c$-$\theta$.

Au cours de l'étape de traitement, le signal de détection démodulé en quadrature - c'est-à dire la fonction $x_3\sin\theta$

- $x_4\cos\theta$, est filtré par le filtre passe bande 66. Puis, le signal de détection démodulé en quadrature filtré est déphasé d'un angle multiple de $\pi/2$.

En variante, cette étape de traitement ne comporte pas d'étape de filtration.

L'étape de traitement 106 du procédé de traitement selon le mode de réalisation de la figure 5, comporte en plus des étapes mentionnées ci-dessus, une étape de traitement du signal de détection démodulé en phase -c'est-à-dire de la fonction $x_2\cos\theta - x_1\sin\theta$-, et une étape de soustraction du signal traité au signal non traité. Autrement dit, une étape de soustraction du signal de détection démodulé en phase traité au signal de détection démodulé en quadrature, c'est-à-dire à la fonction $x_3\sin\theta - x_4\cos\theta$.

Au cours de l'étape de traitement, le signal de détection démodulé en phase, c'est -à-dire la fonction $x_2\cos\theta - x_1\sin\theta$- est filtré et déphasé d'un angle multiple de $\pi/2$. L'étape de filtrage est optionnelle.

Le circuit électronique 12 selon l'invention peut être monté sur l'ensemble des types de gyro-vibrants.

## Revendications

1. Circuit électronique (12) pour gyro-vibrant (2) comportant un résonateur (10), le circuit électronique (12) comprenant :

   - au moins une entrée (4, 6) propre à recevoir le signal de détection représentatif de la vibration du résonateur (10), le signal de détection comprenant au moins un mode de vibration propre (w) et au moins un mode de vibration parasite (p) ; et
   - au moins une unité de démodulation (8, 9) apte à démoduler le signal de détection pour générer un signal de détection démodulé en phase ($x_1$, $x_2$) et un signal de détection démodulé en quadrature ($x_3$, $x_4$) ;

   **caractérisé en ce qu'**il comporte en outre une unité de traitement (64, 65, 72, 74) et un soustracteur (70, 71, 73, 75) propres à éliminer au moins une partie du signal de détection représentatif du mode de vibration parasite (p) à partir du signal de détection démodulé en phase ($x_1$, $x_2$) et du signal de détection démodulé en quadrature ($x_3$, $x_4$).

2. Circuit électronique (12) selon la revendication 1, dans lequel l'unité de traitement (64, 65, 72, 74) est propre à traiter un signal parmi un premier signal et un second signal ; le premier signal et le second signal étant choisis parmi le signal de détection démodulé en phase ($x_1$, $x_2$) et le signal de détection démodulé en quadrature ($x_3$, $x_4$) ; ledit soustracteur (70, 71, 73, 75) étant propre à soustraire le signal traité au signal non traité.

3. Circuit électronique (12) selon l'une quelconque des revendications 1 et 2, dans lequel l'unité de traitement (64, 65, 72, 74) comprend un filtre passe-bande (66) propre à filtrer au moins un signal parmi le signal de détection démodulé en phase ($x_1$, $x_2$) et le signal de détection démodulé en quadrature ($x_3$, $x_4$).

4. Circuit électronique (12) selon la revendication 3, dans lequel le filtre passe-bande (66) est centré sur une fréquence égale à la fréquence repliée du mode de vibration parasite (p).

5. Circuit électronique (12) selon l'une quelconque des revendications 3 et 4, dans lequel le filtre passe-bande (66) présente une largeur de bande environ égale aux dispersions de fréquence résultantes des variations de température et aux dispersions de fréquence résultantes des tolérances de fabrication.

6. Circuit électronique (12) selon l'une quelconque des revendications 2 à 5, dans lequel l'unité de traitement (64, 65, 72, 74) comprend un déphaseur (68) propre à déphaser, d'un angle multiple de $\pi/2$, un signal parmi le signal de détection démodulé en phase ($x_1$, $x_2$) et le signal de détection démodulé en quadrature ($x_3$, $x_4$).

7. Circuit électronique (12) selon les revendications 3 et 6 prises en combinaison, dans lequel le déphaseur (68) est connecté au filtre passe-bande (66).

8. Circuit électronique (12) selon l'une quelconque des revendications 3 à 7, dans lequel le filtre passe-bande (66) est relié au soustracteur (70, 71).

9. Circuit électronique (12) selon l'une quelconque des revendications 1 à 8, qui comprend :

   - au moins une branche de détection (62) comprenant des composants électroniques (48, 49, 50, 52) aptes à détecter une information angulaire ($\pi_c - \theta$) à partir du signal de détection démodulé en phase ($x_1$, $x_2$) ;
   - au moins une branche de détermination (58) comprenant des composants électroniques (30, 32) aptes à déterminer une composante de commande ($C_Q$) du signal d'excitation du résonateur (10) à partir du signal de détection démodulé en quadrature ($x_3$, $x_4$);

- ledit soustracteur (70, 71) appartenant à une branche parmi la branche de détection (62) et la branche de détermination (58), ledit soustracteur (70, 71) étant propre à soustraire le signal de sortie de l'unité de traitement (64, 65, 72, 74) au signal d'entrée du soustracteur (70).

**10.** Circuit électronique (12) selon la revendication 9, dans lequel le soustracteur (70) appartient à la branche de détection (62).

**11.** Circuit électronique (12) selon l'une quelconque des revendications 9 et 10, dans lequel ledit soustracteur (70, 71) est relié à au moins un composant électronique (48, 49, 50, 52) de la branche de détection (62) et à la sortie de l'unité de traitement (64, 65, 72, 74) pour soustraire le signal de sortie de l'unité de traitement (64, 65, 72, 74) au signal de sortie d'au moins un composant électronique (48, 49, 50, 52) de la branche de détection (62).

**12.** Circuit électronique (12) selon l'une quelconque des revendications 9 et 10, dans lequel ledit soustracteur (70, 71) est relié à au moins un composant électronique (48, 49, 50, 52) de la branche de détermination (58) et à la sortie de l'unité de traitement (64, 65, 72, 74) pour soustraire le signal de sortie de l'unité de traitement (64, 65, 72, 74) au signal de sortie d'au moins un composant électronique (48, 49, 50, 52) de la branche de détermination (58)

**13.** Circuit électronique (12) selon l'une quelconque des revendications 1 à 12, qui comprend :

- au moins une branche de génération (54) comprenant des composants électroniques (20, 22, 24) aptes à générer un signal de référence en phase (Φ) et un signal de référence en quadrature (Q) à partir du signal de détection démodulé en quadrature ($x_3$, $x_4$);
- au moins une branche de détermination (56) comprenant des composants électroniques (26, 28) aptes à déterminer un signal de commande d'amplitude ($C_A$) du signal d'excitation du résonateur (10) à partir du signal de détection démodulé en phase ($x_1$, $x_2$) ; et
- un soustracteur supplémentaire (73, 75) disposé sur une branche parmi la branche de génération (54) et la branche de détermination (56), ledit soustracteur supplémentaire (73, 75) étant propre à soustraire le signal de sortie de l'unité de traitement (64, 65, 72, 74) au signal d'entrée du soustracteur (70, 71).

**14.** Gyro-vibrant (2) comportant :

- un résonateur (10) propre à vibrer ;
- des éléments d'excitation ($14_1$, $14_2$) propres à appliquer un signal d'excitation au résonateur (10) pour le faire vibrer ;
- des éléments de détection ($16_1$, $16_2$) aptes à détecter la vibration du résonateur (10) et à générer au moins un signal de détection représentatif de ladite vibration ;

**caractérisé en ce qu'**il comporte un circuit électronique (12) selon l'une quelconque des revendications 1 à 13.

**15.** Procédé de traitement d'au moins un signal de détection d'un gyro-vibrant (2) comportant un résonateur (10), le procédé comportant les étapes suivantes :

- application (100) d'un signal d'excitation au résonateur (10) pour le faire vibrer ;
- détection (102) d'un signal de détection représentatif de la vibration du résonateur (10), le signal de détection comprenant au moins un mode de vibration propre (w) et au moins un mode de vibration parasite (p) ;
- multiplication (104) du signal de détection à une porteuse en phase (Φ) et à une porteuse en quadrature (Q) pour obtenir un signal de détection démodulé en phase ($x_1$, $x_2$) et respectivement un signal de détection démodulé en quadrature ($x_3$, $x_4$) ;

**caractérisé en ce qu'**il comporte en outre une étape (106) d'élimination, par traitement et soustraction, d'au moins une partie du signal de détection représentatif du mode de vibration parasite (p) à partir du signal de détection démodulé en phase ($x_1$, $x_2$) et du signal de détection démodulé en quadrature ($x_3$, $x_4$).

**Patentansprüche**

1. Elektronische Schaltung (12) für einen Vibrationskreisel (2), der einen Resonator (10) aufweist, wobei die elektronische Schaltung (12) enthält:

   - mindestens einen Eingang (4, 6), der das für die Vibration des Resonators (10) repräsentative Erfassungssignal empfangen kann, wobei das Erfassungssignal mindestens einen Eigenvibrationsmodus (w) und mindestens einen Störvibrationsmodus (p) enthält; und
   - mindestens eine Demodulationseinheit (8, 9), die das Erfassungssignal demodulieren kann, um ein phasendemoduliertes Erfassungssignal ($x_1$, $x_2$) und ein quadraturdemoduliertes Erfassungssignal ($x_3$, $x_4$) zu erzeugen;

   **dadurch gekennzeichnet, dass** sie außerdem eine Verarbeitungseinheit (64, 65, 72, 74) und ein Subtrahierglied (70, 71, 73, 75) aufweist, die mindestens einen Teil des für den Störvibrationsmodus (p) repräsentativen Erfassungssignals ausgehend vom phasendemodulierten Erfassungssignal ($x_1$, $x_2$) und vom quadraturdemodulierten Erfassungssignal ($x_3$, $x_4$) entfernen können.

2. Elektronische Schaltung (12) nach Anspruch 1, wobei die Verarbeitungseinheit (64, 65, 72, 74) ein Signal von einem ersten Signal und einem zweiten Signal verarbeiten kann; wobei das erste Signal und das zweite Signal aus dem phasendemodulierten Erfassungssignal ($x_1$, $x_2$) und dem quadraturdemodulierten Erfassungssignal ($x_3$, $x_4$) ausgewählt werden; wobei das Subtrahierglied (70, 71, 73, 75) das verarbeitete Signal vom nicht verarbeiteten Signal subtrahieren kann.

3. Elektronische Schaltung (12) nach einem der Ansprüche 1 und 2, wobei die Verarbeitungseinheit (64, 65, 72, 74) ein Bandpassfilter (66) enthält, das mindestens ein Signal von dem phasendemodulierten Erfassungssignal ($x_1$, $x_2$) und dem quadraturdemodulierten Erfassungssignal ($x_3$, $x_4$) filtern kann.

4. Elektronische Schaltung (12) nach Anspruch 3, wobei das Bandpassfilter (66) auf eine Frequenz gleich der Faltfrequenz des Störvibrationsmodus (p) zentriert ist.

5. Elektronische Schaltung (12) nach einem der Ansprüche 3 und 4, wobei das Bandpassfilter (66) eine Bandbreite etwa gleich den aus den Temperaturschwankungen resultierenden Frequenzstreuungen und den aus den Herstellungstoleranzen resultierenden Frequenzstreuungen aufweist.

6. Elektronische Schaltung (12) nach einem der Ansprüche 2 bis 5, wobei die Verarbeitungseinheit (64, 65, 72, 74) einen Phasenschieber (68) enthält, der ein Signal von dem phasendemodulierten Erfassungssignal ($x_1$, $x_2$) und dem quadraturdemodulierten Erfassungssignal ($x_3$, $x_4$) um einen Winkel phasenverschieben kann, der ein Vielfaches von $\pi/2$ ist.

7. Elektronische Schaltung (12) nach den Ansprüchen 3 und 6 in Kombination, wobei der Phasenschieber (68) mit dem Bandpassfilter (66) verbunden ist.

8. Elektronische Schaltung (12) nach einem der Ansprüche 3 bis 7, wobei das Bandpassfilter (66) mit dem Subtrahierglied (70, 71) verbunden ist.

9. Elektronische Schaltung (12) nach einem der Ansprüche 1 bis 8, die enthält:

   - mindestens einen Erfassungszweig (62), der elektronische Bauteile (48, 49, 50, 52) enthält, die eine Winkelinformation ($\theta_c$-$\theta$) ausgehend vom phasendemodulierten Erfassungssignal ($x_1$, $x_2$) erfassen können;
   - mindestens einen Bestimmungszweig (58), der elektronische Bauteile (30, 32) enthält, die eine Steuerkomponente ($C_Q$) des Anregungssignals des Resonators (10) ausgehend vom quadraturdemodulierten Erfassungssignal ($x_3$, $x_4$) bestimmen können;
   - wobei das Subtrahierglied (70, 71) zu einem Zweig von dem Erfassungszweig (62) und dem Bestimmungszweig (58) gehört, wobei das Subtrahierglied (70, 71) das Ausgangssignal der Verarbeitungseinheit (64, 65, 72, 74) vom Eingangssignal des Subtrahierglieds (70) subtrahieren kann.

10. Elektronische Schaltung (12) nach Anspruch 9, wobei das Subtrahierglied (70) zum Erfassungszweig (62) gehört.

11. Elektronische Schaltung (12) nach einem der Ansprüche 9 und 10, wobei das Subtrahierglied (70, 71) mit mindestens einem elektronischen Bauteil (48, 49, 50, 52) des Erfassungszweigs (62) und mit dem Ausgang der Verarbeitungseinheit (64, 65, 72, 74) verbunden ist, um das Ausgangssignal der Verarbeitungseinheit (64, 65, 72, 74) vom Ausgangssignal mindestens eines elektronischen Bauteils (48, 49, 50, 52) des Erfassungszweigs (62) zu subtrahieren.

**12.** Elektronische Schaltung (12) nach einem der Ansprüche 9 und 10, wobei das Subtrahierglied (70, 71) mit mindestens einem elektronischen Bauteil (48, 49, 50, 52) des Bestimmungszweigs (58) und mit dem Ausgang der Verarbeitungseinheit (64, 65, 72, 74) verbunden ist, um das Ausgangssignal der Verarbeitungseinheit (64, 65, 72, 74) vom Ausgangssignal mindestens eines elektronischen Bauteils (48, 49, 50, 52) des Bestimmungszweigs (58) zu subtrahieren.

**13.** Elektronische Schaltung (12) nach einem der Ansprüche 1 bis 12, die enthält:

- mindestens einen Erzeugungszweig (54), der elektronische Bauteile (20, 22, 24) enthält, die ein Phasenbezugssignal ($\Phi$) und ein Quadraturbezugssignal (Q) ausgehend vom quadraturdemodulierten Erfassungssignal ($x_3$, $x_4$) erzeugen können;
- mindestens einen Bestimmungszweig (56), der elektronische Bauteile (26, 28) enthält, die ein Amplitudensteuersignal ($C_A$) des Anregungssignals des Resonators (10) ausgehend vom phasendemodulierten Erfassungssignal ($x_1$, $x_2$) bestimmen können; und
- ein zusätzliches Subtrahierglied (73, 75), das auf einem Zweig von dem Erzeugungszweig (54) und dem Bestimmungszweig (56) angeordnet ist, wobei das zusätzliche Subtrahierglied (73, 75) das Ausgangssignal der Verarbeitungseinheit (64, 65, 72, 74) vom Eingangssignal des Subtrahierglieds (70, 71) subtrahieren kann.

**14.** Vibrationskreisel (2), der aufweist:

- einen Resonator (10), der vibrieren kann;
- Anregungselemente ($14_1$, $14_2$), die ein Anregungssignal an den Resonator (10) anlegen können, um ihn vibrieren zu lassen;
- Erfassungselemente ($16_1$, $16_2$), die die Vibration des Resonators (10) erfassen und mindestens ein für die Vibration repräsentives Erfassungssignal erzeugen können;

**dadurch gekennzeichnet, dass** er eine elektronische Schaltung (12) nach einem der Ansprüche 1 bis 13 aufweist.

**15.** Verfahren zur Verarbeitung mindestens eines Erfassungssignals eines Vibrationskreisels (2), der einen Resonator (10) aufweist, wobei das Verfahren die folgenden Schritte aufweist:

- Anlegen (100) eines Anregungssignals an den Resonator (10), um ihn vibrieren zu lassen;
- Erfassen (102) eines für die Vibration des Resonators (10) repräsentativen Erfassungssignals, wobei das Erfassungssignal mindestens einen Eigenvibrationsmodus (w) und mindestens einen Störvibrationsmodus (p) enthält;
- Multiplizieren (104) des Erfassungssignals mit einer Phasenträgerwelle ($\Phi$) und mit einer Quadraturträgerwelle (Q), um ein phasendemoduliertes Erfassungssignal ($x_1$, $x_2$) bzw. ein quadraturdemoduliertes Erfassungssignal ($x_3$, $x_4$) zu erhalten;

**dadurch gekennzeichnet, dass** es außerdem einen Schritt (106) des Entfernens, durch Verarbeitung und Subtraktion, mindestens eines Teils des für den Störvibrationsmodus (p) repräsentativen Erfassungssignals ausgehend vom phasendemodulierten Erfassungssignal ($x_1$, $x_2$) und vom quadraturdemodulierten Erfassungssignal ($x_3$, $x_4$) aufweist.

**Claims**

**1.** Electronic circuit (12) for a vibrating gyroscope (2) comprising a resonator (10), the electronic circuit (12) comprising:

- at least one input (4, 6) configured to receive the detection signal representative of the vibration of the resonator (10), the detection signal comprising at least one normal vibration mode (w) and at least one parasitic vibration mode (p); and
- at least one demodulation unit (8, 9) configured to demodulate the detection signal in order to generate a phase demodulated detection signal ($x_1$, $x_2$) and a quadrature demodulated detection signal ($x_3$, $x_4$);

**characterised in that** it further comprises a processing unit (64, 65, 72, 74) and a subtractor (70, 71, 73, 75) configured toeliminate at least a part of the signal representative of the parasitic vibration mode (p) from the phase demodulated detection signal ($x_1$, $x_2$) and from the quadrature demodulated detection signal ($x_3$, $X_4$).

2. Electronic circuit (12) as claimed in claim 1, in which the processing unit (64, 65, 72, 74) is configured to process one signal from a first signal and a second signal, the first signal and the second signal being selected from the phase demodulated detection signal ($x_1$, $x_2$) and the quadrature demodulated detection signal ($x_3$, $x_4$), said subtractor (70, 71, 73, 75) being configured to subtract the processed signal from the non-processed signal.

3. Electronic circuit (12) as claimed in any one of claims 1 and 2, in which the processing unit (64, 65, 72, 74) comprises a band-pass filter (66) configured to filter at least one signal from the phase demodulated detection signal ($x_1$, $x_2$) and the quadrature demodulated detection signal ($x_3$, $x_4$).

4. Electronic circuit (12) as claimed in claim 3, in which the band-pass filter (66) is centred on a frequency equal to the frequency overlapped by the  parasitic vibration mode (p).

5. Electronic circuit (12) as claimed in any one of claims 3 and 4, in which the band-pass filter (66) has a band width approximately equal to the frequency dispersions resulting from variations in temperature and to the frequency dispersions resulting from manufacturing tolerances.

6. Electronic circuit (12) as claimed in any one of claims 2 to 5, in which the processing unit (64, 65, 72, 74) comprises a phase shifter (68) configured to shift, by an angle that is a multiple of $\pi/2$, a signal from among the phase demodulated detection signal ($x_1$, $x_2$) and the quadrature demodulated detection signal ($x_3$, $x_4$).

7. Electronic circuit (12) as claimed in claims 3 and 6 in combination, in which the phase shifter (68) is connected to the band-pass filter (66).

8. Electronic circuit (12) as claimed in any one of claims 3 to 7, in which the band-pass filter (66) is connected to the subtractor (70, 71).

9. Electronic circuit (12) as claimed in any one of claims 1 to 8, which comprises:

   - at least one detection branch (62) comprising electronic components (48, 49, 50, 52) configured to detect an angular data ($\theta_c - \theta$) from the phase demodulated detection signal ($x_1$, $x_2$);
   - at least one determination branch (58) comprising electronic components (30, 32) configured to determine a control component ($C_Q$) of the excitation signal of the resonator (10) from the quadrature demodulated detection signal ($x_3$, $x_4$);
   - said subtractor (70, 71) belonging to a branch selected from the detection branch (62) and the determination branch (58), said subtractor (70,71) being configured to subtract the output signal of the processing unit (64, 65, 72, 74) from the input signal of the subtractor (70).

10. Electronic circuit (12) as claimed in claim 9, in which the subtractor (70) belongs to the detection branch (62).

11. Electronic circuit (12) as claimed in any one of claims 9 and 10, in which said subtractor (70, 71) is connected to at least one electronic component (48, 49, 50, 52) of the detection branch (62) and to the output of the processing unit (64, 65, 72, 74) in order to subtract the output signal of the processing unit (64, 65, 72, 74) from the output signal of at least one electronic component (48, 49, 50, 52) of the detection branch (62).

12. Electronic circuit (12) as claimed in any one of claims 9 and 10, in which said subtractor (70, 71) is connected to at least one electronic component (48, 49, 50, 52) of the determination branch (58) and to the output of the processing unit (64, 65, 72, 74) in order to subtract the output signal of the processing unit (64, 65, 72, 74) from the output signal of at least one electronic component (48, 49, 50, 52) of the determination branch (58).

13. Electronic circuit (12) as claimed in any one of claims 1 to 12, which comprises:

   - at least one generator branch (54) comprising electronic components (20, 22, 24) configured to generate a phase reference signal ($\Phi$) and a quadrature reference signal (Q) from the quadrature demodulated detection signal ($x_3$, $x_4$);

- at least one determination branch (56) comprising electronic components (26, 28) configured to determine an amplitude control signal ($C_A$) for the excitation signal of the resonator (10) from the phase demodulated detection signal ($x_1$, $x_2$); and
- an additional subtractor (73, 75) disposed on one branch selected from the generator branch (54) and the determination branch (56), said additional subtractor (73, 75) being configured to subtract the output signal of the processing unit (64, 65, 72, 74) from the input signal of the subtractor (70, 71).

**14.** Vibrating gyroscope (2) comprising:

- a resonator (10) configured to vibrate;
- excitation elements ($14_1$, $14_2$) configured to apply an excitation signal to the resonator (10) in order to make it vibrate;
- detection elements ($16_1$, $16_2$) configured to detect the vibration of the resonator (10) and to generate at least one detection signal representative of said vibration;

**characterised in that** it comprises an electronic circuit (12) as claimed in any one of claims 1 to 13.

**15.** Method of processing at least one detection signal of a vibrating gyroscope (2) comprising a resonator (10), the method comprising the following steps:

- applying (100) an excitation signal to the resonator (10) to make it vibrate;
- detecting (102) a detection signal representative of the vibration of the resonator (10), the detection signal comprising at least one normal vibration mode (w) and at least one parasitic vibration mode (p);
- multiplying (104) the detection signal by a phase carrier ($\Phi$) and by a quadrature carrier (Q) to obtain a phase demodulated detection signal ($x_1$, $x_2$) and respectively a quadrature demodulated detection signal ($x_3$, $x_4$);

**characterised in that** it further comprises a step (106), based on processing and subtraction, of eliminating at least a part of the detection signal representative of the parasitic vibration mode (p) from the phase demodulated detection signal ($x_1$, $x_2$) and the quadrature demodulated detection signal ($x_3$, $x_4$).

FIG.1.

FIG.2.

FIG.3.

EP 2 438 400 B1

VERS CALCULATEUR

FIG.4.

FIG.5.

FIG.6.

FIG.7.

**RÉFÉRENCES CITÉES DANS LA DESCRIPTION**

**Documents brevets cités dans la description**

- EP 0810418 A